Europäisches Patentamt

European Patent Office

Office européen des brevets

(11) Veröffentlichungsnummer: **0 023 356**
**B1**

(19)

(12) **EUROPÄISCHE PATENTSCHRIFT**

(45) Veröffentlichungstag der Patentschrift:
**25.05.83**

(21) Anmeldenummer: **80104414.0**

(22) Anmeldetag: **26.07.80**

(51) Int. Cl.³: **A 43 B 13/37**, A 43 B 9/16,
B 29 F 1/10

(54) **Schuh, insbesondere Damenschuh.**

(30) Priorität: **26.07.79 DE 2930271**

(43) Veröffentlichungstag der Anmeldung:
**04.02.81 Patentblatt 81/5**

(45) Bekanntmachung des Hinweises auf die Patenterteilung:
**25.05.83 Patentblatt 83/21**

(84) Benannte Vertragsstaaten:
**BE FR IT LU**

(56) Entgegenhaltungen:
**DE-A-2 122 564**
**DE-A-2 444 472**
**DE-A-2 559 208**
**DE-B-2 603 716**
**FR-A-1 476 115**
**FR-A-2 409 715**
**LU-A-38 348**
**US-A-3 109 701**
**US-A-3 226 851**

(73) Patentinhaber: **ESANA-Schuhfabrik Sailer GmbH,
Härkersäcker 1, D-7100 Heilbronn-Kirchhausen (DE)**

(72) Erfinder: **Sailer, Josef, Asperger Strasse 39,
D-7100 Heilbronn-Kirchhausen (DE)**

(74) Vertreter: **Patentanwälte Dipl.-Ing. W. Scherrmann
Dr.-Ing. R. Rüger, Webergasse 3 Postfach 348,
D-7300 Esslingen (Neckar) (DE)**

## Schuh, insbesondere Damenschuh

Die Erfindung bezieht sich auf einen Schuh, und insbesondere einen Damenschuh, mit einer Laufsohle und einer Fußauflage aus Kunststoff oder Gummi (Spritzmaterial) und einem Laufsohle und Fußauflage verbindenden, an seiner Umfangsfläche von Spritzmaterial freien Absatz, insbesondere Keilabsatz.

Bei einem bekannten Schuh der vorgenannten Art ist der Keilabsatz mindestens in den Randbereichen auf der Ober- und Unterseite, die mit dem Spritzmaterial in Berührung kommen, mit Ausnehmungen versehen, durch die das aufgebrachte Material verankert ist (DE-A-2 444 472). Das Spritzmaterial umgibt den Schaft mit der Brandsohle einerseits und den Keilabsatz andererseits in ihren angrenzenden Bereichen derart, daß es nach außen als Band in Erscheinung tritt, das teilweise auf dem Schaft und teilweise auf dem Keilabsatz aufliegt. Das Anbringen der Ausnehmungen in den Randbereichen sowohl der Ober- als auch der Unterseite des Keilabsatzes ist verhältnismäßig umständlich, und es bedarf auch eines genauen Gießverfahrens, um dafür Sorge zu tragen, daß das Spritzmaterial in die zahlreichen Ausnehmungen einfließt. Zudem entspricht das breite Kunststoffband, das den Keilabsatz oben begrenzt, nicht immer dem herrschenden Geschmack.

Es ist auch schon ein Damenschuh mit einem durch Spritzmaterial mit dem Schaft und der Brandsohle sowie mit der Laufsohle verbundenen Keilabsatz bekannt, bei dem der Keilabsatz aus einem Absatzkern und einem diesen umgebenden Spritzmaterialmantel besteht und dieser den Kern oben abschließende Mantel beim Spritzgießen an den Schuhoberteil angeformt ist (DE-U-1 938 040). Damit der Absatzkern von dem ihn umgebenden Mantel aus Spritzmaterial gehalten ist und eine Verbindung mit dem Mantel zustandekommt, ist der Absatzkern mit mehreren waagerechten Bohrungen versehen, in welche das Spritzmaterial beim Spritzgießen eindringt und hiernach eine Verbindung zwischen den Seitenteilen des Mantels bildet. Dieser bekannte Schuh hat den Nachteil, daß das Äußere des Keilabsatzes aus Spritzmaterial besteht, und zwar aus dem gleichen Material wie die Laufsohle, und daß daher die Gestaltung des Äußeren des Keilabsatzes sehr einförmig ist. Hierzu kommt, daß die Erzeugung der Umhüllung des Keilabsatzes einen nicht unerheblichen Materialaufwand und das Einsetzen des Absatzkerns in die Spritzgießform ziemlich umständliche Maßnahmen erfordern.

Aufwendig ist auch die Herstellung eines Schuhs, der eine randseitig zum Schuhschaft hin aufgebogene Laufsohle aus biegsamem Material, z. B. Leder, aufweist, die durch Verbindung (Vernähen) ihres aufgebogenen Randes mit dem durch den Schuhschaft und die Innensohle gebildeten Schuhoberteil, zusammen mit diesem, eine Tasche zur Aufnahme einer Zwischensohleneinlage und eines Einlageteils in Gestalt eines Absatzstückes bildet (DE-A-2 603 716). Die Laufsohle ist dabei in einem gegen das Einlageteil abstützbaren Bereich mit einer Öffnung versehen, die zum Einbringen eines fließfähigen Kunststoffes in die Tasche dient, wobei der eine Zwischensohle bildende Kunststoff eine durchgehende Öffnung des Einlageteils ausfüllt. Da das Kunststoffmaterial in die von der Laufsohle und dem Schuhoberteil gebildete Tasche eingespritzt wird, ist das als Absatzstück ausgebildete Einlageteil grundsätzlich außen immer von dem Kunststoffmaterial und dem Material der Laufsohle umgeben. Eine beispielsweise farblich von der Laufsohle abweichende äußere Gestaltung des Absatzes ist damit nicht ohne weiteres möglich.

Schließlich ist ein Schuh bekannt (LU-A-38 348), bei dessen Herstellung derart vorgegangen wurde, daß man an der Oberseite der Innensohle eine oder mehrere Rillen anordnete, in deren Grund Bohrungen vorgesehen sind, welche die Gesamtstärke der Innensohle und einer gegebenenfalls vorhandenen Absatzeinlage durchsetzen und auf der Unterseite derart münden, daß nach Anformen der Laufsohle unter die Innensohle die Innensohle mit der Laufsohle gewissermaßen durch Kautschuk- oder Kunststoffäden »vernäht« ist. Bei diesem Verfahren muß von einer vorgefertigten Innensohle ausgegangen werden, an die die Laufsohle angeformt wird, was verhältnismäßig teuer ist. Außerdem ist auch bei diesem Schuh der Absatz grundsätzlich auf seiner Außenseite von dem die Laufsohle bildenden Material umgeben.

Aufgabe der Erfindung ist es, eine einfache und einwandfreie Verbindung zwischen der Laufsohle und der Fußauflage herzustellen, die zugleich eine Verankerung von Fußauflage und Laufsohle an dem Absatz herstellt und hierbei einen Schuh zu schaffen, der geschmacklich vorteilhaft gestaltet ist.

Zur Lösung der vorgenannten Aufgabe sind gemäß der Erfindung die Laufsohle und die Fußauflage sowie der Absatz durch ein sich von der Laufsohle bis zur Fußauflage erstreckendes Spritzmaterial, welches ein Durchgangsloch oder mehrere solcher Durchgangslöcher des Absatzes ausfüllt, miteinander verbunden, wobei die oberen Ränder des Absatzes, insbesondere des Keilabsatzes, hochgezogen sind und eine Schale bilden.

Vorteilhaft erweitert sich das betreffende Durchgangsloch sowohl von der Fußauflage als auch von der Laufsohle her nach innen. Auf die Brandsohle ist eine Decksohle aufgebracht.

Der durch das Durchgangsloch hindurchgehende Spritzmaterialbolzen stellt eine einwandfreie Verbindung zwischen der Laufsohle und der Fußauflage her, so daß beide Teile stabil aneinander befestigt sind. Andererseits ist das Anbringen solcher Durchgangslöcher an einem Absatz eine sehr einfache Maßnahme, und es bereitet auch keine Schwierigkeiten, sicherzustellen, daß das Durchgangsloch oder die Durchgangslöcher von dem Spritzmaterial einwandfrei durchflossen werden. Vorzugsweise wird das Spritzmaterial im Bereich der Laufsohle in die Spritzgießform eingebracht, um sodann nach oben über die Durchgangsbohrung in den Bereich der Fußauflage zu gelangen und hier die Fußauflage zu bilden. Die hierbei zustandekommende Verankerung zwischen diesen beiden Teilen im hinteren Bereich des Schuhs ist von besonderem Vorteil für dessen Festigkeit.

Aufgrund der Ausbildung des Absatzes als Schale ist das die Fußauflage darstellende Spritzmaterial am Schuh von außen nicht mehr sichtbar. Vielmehr zeigt sich hier lediglich die Außenseite des Absatzes. Die Umfangsfläche des Absatzes kann in an sich bekannter Weise mit einem Überzug z. B. aus Leder oder Textilmaterial versehen sein, dessen obere Kante um den oberen Rand der die Fußauflage enthaltenden Schale umgebuggt ist. Auf diese Weise braucht zum Befestigen des oberen Randes des Überzuges kein besonderes Band aus Spritzmaterial mehr vorgesehen zu sein. Vielmehr kommt nunmehr die Befestigung des Überzuges dadurch zustande, daß das in die Schale eingebrachte, zur Bildung der Fußauflage dienende Spritzmaterial den umgebuggten Rand des Überzuges des Absatzes innerhalb der Schale festlegt und diesen Rand damit gleichzeitig auch kaschiert. Es ist daher möglich, den Absatz eines Damenschuhs z. B. vollständig mit Leder oder einem Textilstoff zu überziehen, ohne daß außen an der Umfangsfläche des Absatzes in der Nachbarschaft der Fußauflage ein eventuell störendes Band aus Spritzmaterial erscheint.

In der Zeichnung sind mehrere Ausführungsbeispiele des Gegenstandes der Erfindung dargestellt. Es zeigt

Fig. 1 einen Damenschuh gemäß der Erfindung mit einem Keilabsatz in perspektivischer Darstellung,

Fig. 2 einen senkrechten Längsschnitt entlang der Mittellinie des Schuhs nach Fig. 1,

Fig. 2a einen senkrechten Schnitt gemäß der Linie IIa-IIa der Fig. 2 in einer Teildarstellung,

Fig. 3 eine Seitenansicht eines Keilabsatzes eines Schuhs gemäß der Erfindung,

Fig. 4 eine Ansicht der Oberseite des Keilabsatzes,

Fig. 5 einen Querschnitt des Keilabsatzes gemäß der Linie V-V der Fig. 4,

Fig. 6 eine Seitenansicht eines normalen Absatzes eines Schuhs gemäß der Erfindung,

Fig. 7 einen Querschnitt eines Absatzes mit hochgezogenen Schalenrändern bei einem Schuh gemäß der Erfindung,

Fig. 8 einen senkrechten Längsschnitt eines Keilabsatzes mit nach vorn gezogener Schale und

Fig. 9 eine Ansicht der Oberseite des Keilabsatzes gemäß Fig. 8.

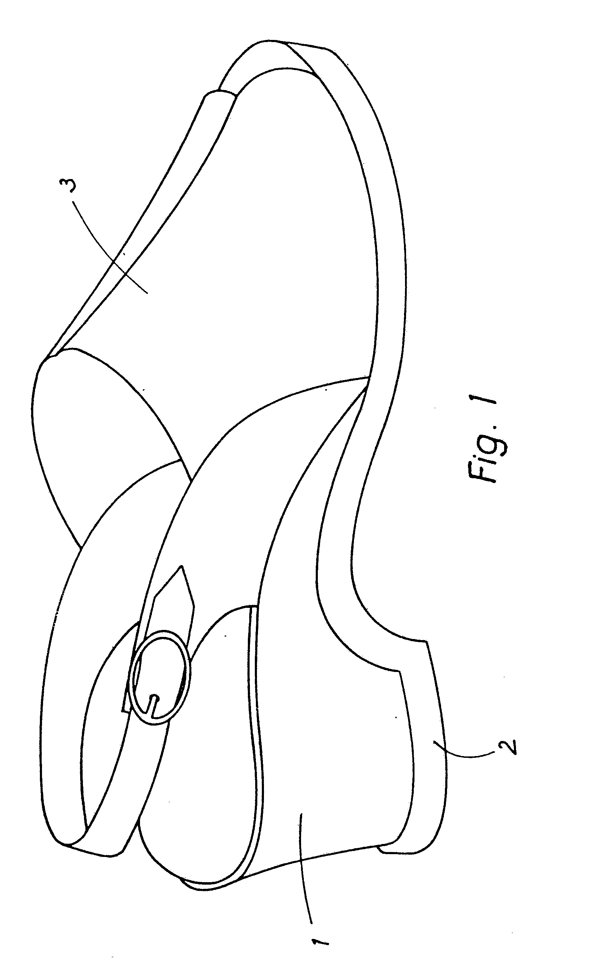

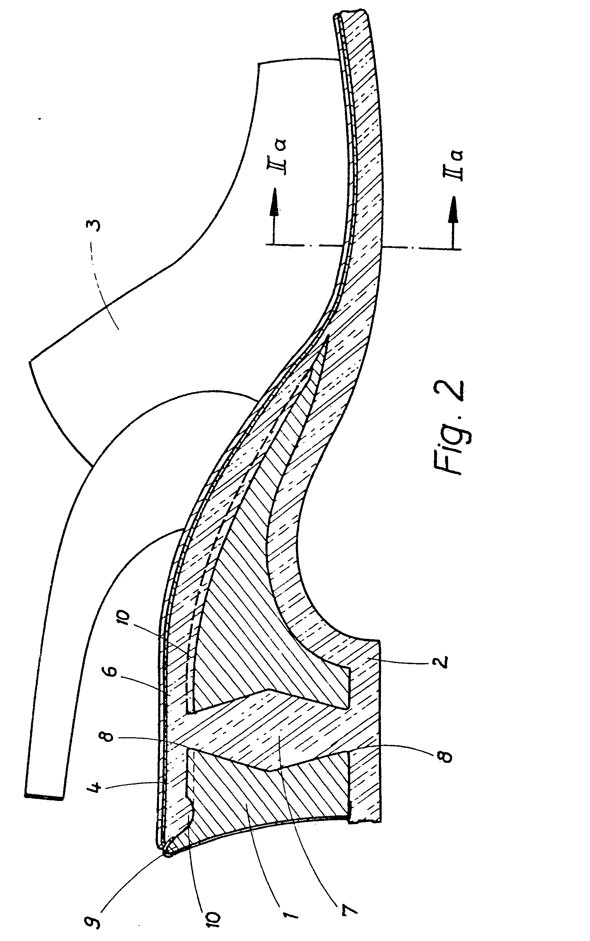

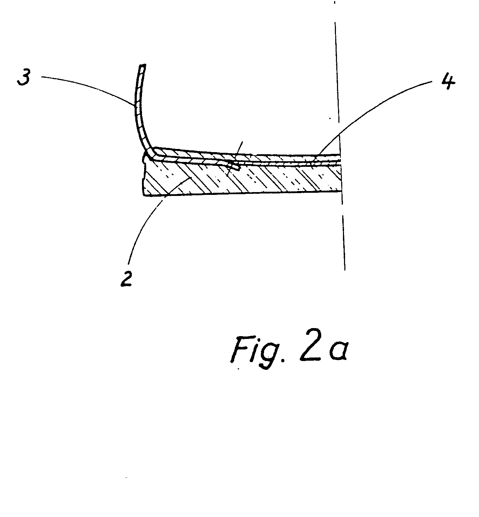

Den Fig. 1 bis 5 liegt ein Damenschuh mit einem Keilabsatz 1 zugrunde, der unten mit der Laufsohle 2 und oben mit dem Schaft 3 und dessen üblicher Brandsohle 4 verbunden ist. Die Laufsohle 2 ist durch Spritzgießen aus Kunststoff hergestellt und schließt den Keilabsatz 1 mit einem nach oben ragenden Rand 5 ein.

Der Keilabsatz 1 weist ein sich von der Laufsohle 2 bis zu einer Fußauflage 6 erstreckendes Durchgangsloch 7 auf, das sich sowohl von der Laufsohle 2 als auch von der Fußauflage 6 her nach innen erweitert. Beim Spritzgießen in der entsprechenden Spritzgießform dringt der von unten im Bereich der Laufsohle 2 eingeführte flüssige Kunststoff durch das Durchgangsloch 7 hindurch, füllt dieses aus und bildet hierauf die Fußauflage 6 oberhalb des Keilabsatzes 1. Durch die mit Bezug auf den Längsschnitt doppelkonische Gestaltung des Durchgangsloches 7 ergibt sich beim Festwerden des Kunststoffes eine stabile Verankerung, zumal sich infolge der Treibkraft des Spritzmaterials im Bereich der Mittelfläche des Keilabsatzes ein Druck aufbaut, auf den infolge der konischen Gestaltung der Wandungen des Durchgangsloches 7 ein Gegendruck zurückwirkt. Das Durchgangsloch 7 weist an seinen beiden Eingängen abgerundete Kanten 8 auf, um zu vermeiden, daß der in dem Durchgangsloch 7 entstehende Kunststoffbolzen, der eine feste Verbindung zwischen der Laufsohle 2 und der Fußauflage 6 etwa durch scharfe Kanten an diesen Stellen abgeschert werden kann.

Statt eines Durchgangsloches 7 können auch mehrere solcher etwa senkrecht verlaufender Durchgangslöcher in dem Absatz 1 vorzugsweise hintereinander angeordnet sein.

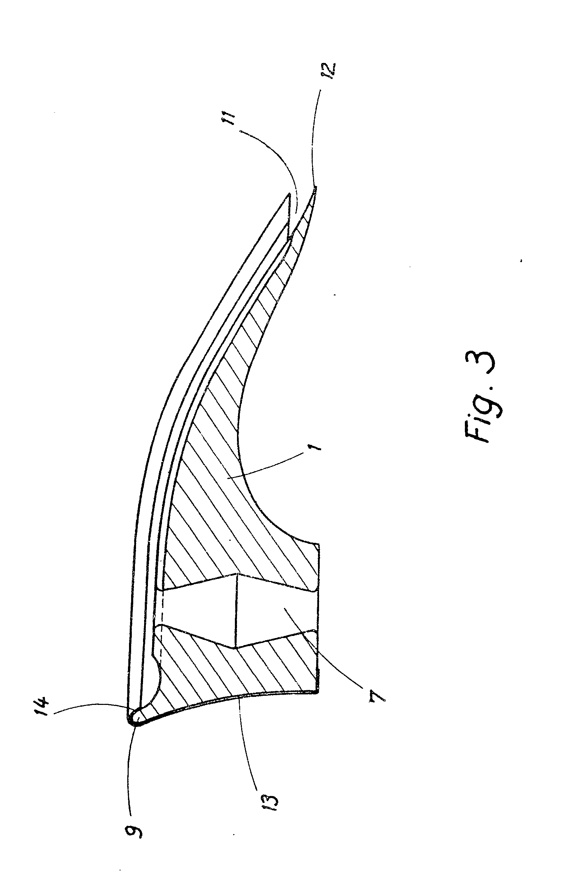

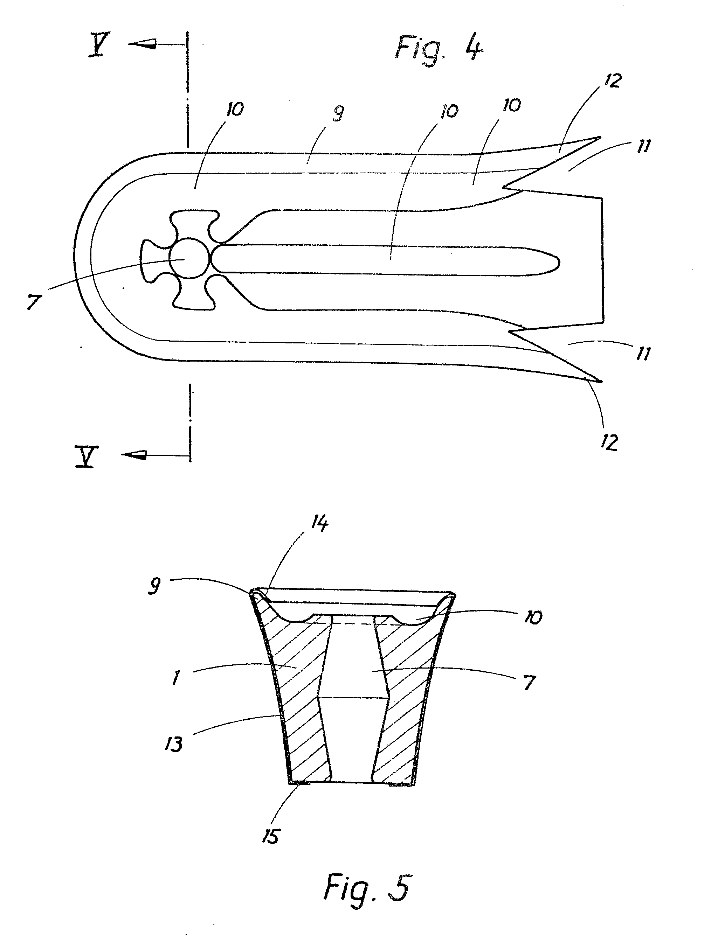

Wie sich insbesondere aus den Fig. 3 und 5 ergibt, sind die oberen Ränder 9 des Keilabsatzes 1 hochgezogen, so daß die Oberseite des Absatzes eine Schale bildet. Diese Schale nimmt den über das Durchgangsloch 7 einfließenden Kunststoff auf und begrenzt die durch diesen gebildete Fußauflage 6 derart, daß diese von außen nicht mehr sichtbar ist.

Im Inneren der durch die hochgezogenen Ränder 9 gebildeten Schale sind Fließrinnen 10 für den aus dem Durchgangsloch 7 austretenden Kunststoff ausgebildet. Diese gehen auf dem Boden der Schale teilweise radial von dem Durchgangsloch 7 aus und verlaufen andererseits parallel zur Längsachse des Keilabsatzes 1 in der Mitte und zu beiden Seiten des Schalenbodens. Auf diese Weise ist das sichere Abfließen des Kunststoffs bei seinem Austreten aus dem Durchgangsloch 7 gewährleistet, so daß eine vollkommene Fußauflage 6 erzeugt wird. Hierbei tragen die Fließrinnen 10 auch noch dazu bei, daß die Fußauflage 6 elastisch wird und das Gehen in dem Schuh erleichtert.

Am vorderen Ende des oben schalenförmig ausgebildeten Keilabsatzes 1 sind teilweise in die Schalenränder hineingreifende spitzwinklige Ausschnitte 11 ausgebildet, durch welche die Enden 12 der Schalenränder freigelegt sind. Infolge dieser Gestaltung erhalten die Enden 12 der Schalenränder eine solche Beweglichkeit, daß sie sich beim Einfließen des Kunststoffs gegen die Wand der Form anlegen, so daß ein einwandfreies Anliegen der Enden 12 an den Rand 5 der Laufsohle 2 sichergestellt ist. Im übrigen kommt es an diesem vorderen Ende des schalenförmigen Keilabsatzes 1 naturgemäß zu einer Vereinigung der die Fußauflage 6 und die Laufsohle 2 bildenden Kunststoffschichten.

Die Umfangsfläche des Keilabsatzes 1 ist mit einem Überzug 13 versehen, dessen obere Kante 14 um den oberen Rand 9 der die Fußauflage 6 enthaltenden Schale umgebuggt ist. Die untere Kante 15 des Überzuges 13 legt sich dagegen gegen die Unterseite des Keilabsatzes 1 an. Demgemäß werden sowohl die obere Kante 14 als auch die Unterkante 15 des Überzuges 13 beim Spritzgießen durch das Material der Fußauflage 6 bzw. der Laufsohle 2 festgelegt. Das geschieht derart, daß das die Befestigung bewirkende Kunststoffmaterial der Fußauflage 6 nach außen hin nicht sichtbar wird.

Statt eines modischen Überzuges aus Leder, einem Textilstoff oder einem anderen geeigneten Material kann auch das Absatzmaterial selbst entsprechend gefärbt oder anderweitig durch plastische Verformung modisch gestaltet sein.

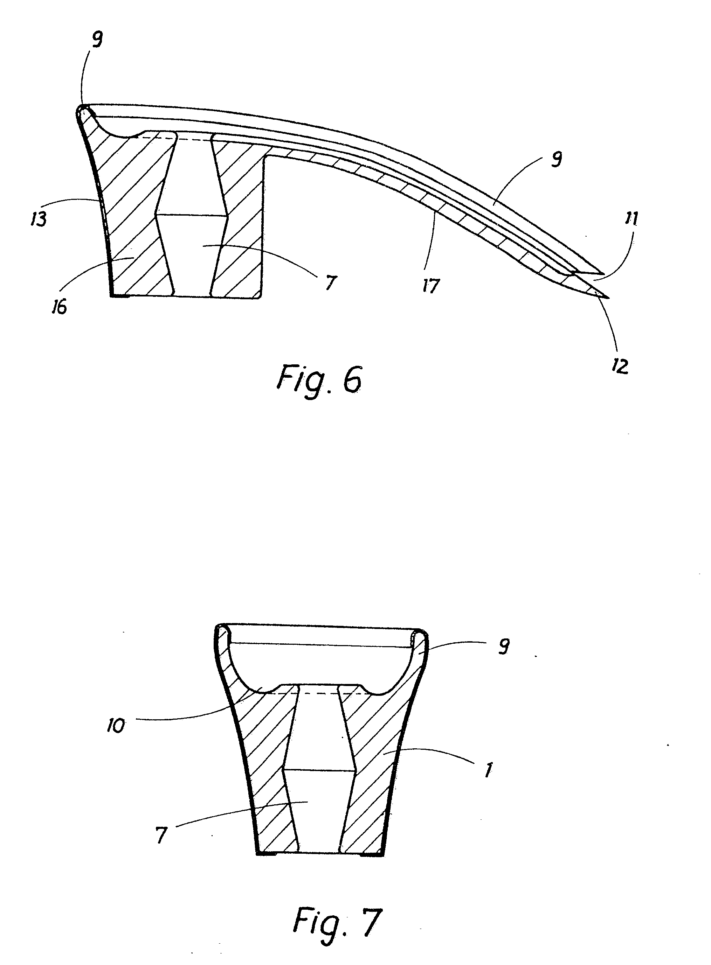

Wie Fig. 6 zeigt, kann statt eines Keilabsatzes auch ein Absatz normaler Gestaltung in der beschriebenen Weise mit Laufsohle und Fußauflage verbunden sein. Auch ein solcher normaler Absatz 16 weist sodann das Durchgangsloch 7, den hochgezogenen Schalenrand 9 und den sich nach vorn erstreckenden ebenfalls den hochgezogenen Schalenrand 9 aufweisenden Ansatz 17 auf, wobei die gebildete Schale wiederum zur Aufnahme der Fußauflage 6 aus Kunststoff dient. Auch der Absatz 16 kann auf die angegebene Weise mit einem Überzug 13 versehen sein oder seinerseits ohne einen solchen ein modisches Äußeres aufweisen.

Wie aus Fig. 7 erkenntlich ist, können die Ränder 9 des Absatzes 1 bzw. 16 auch so weit hochgezogen sein, daß sie um ein gewisses Maß über die Fußauflage 6 hinausragen und somit eine seitliche Stütze für den Fuß bilden.

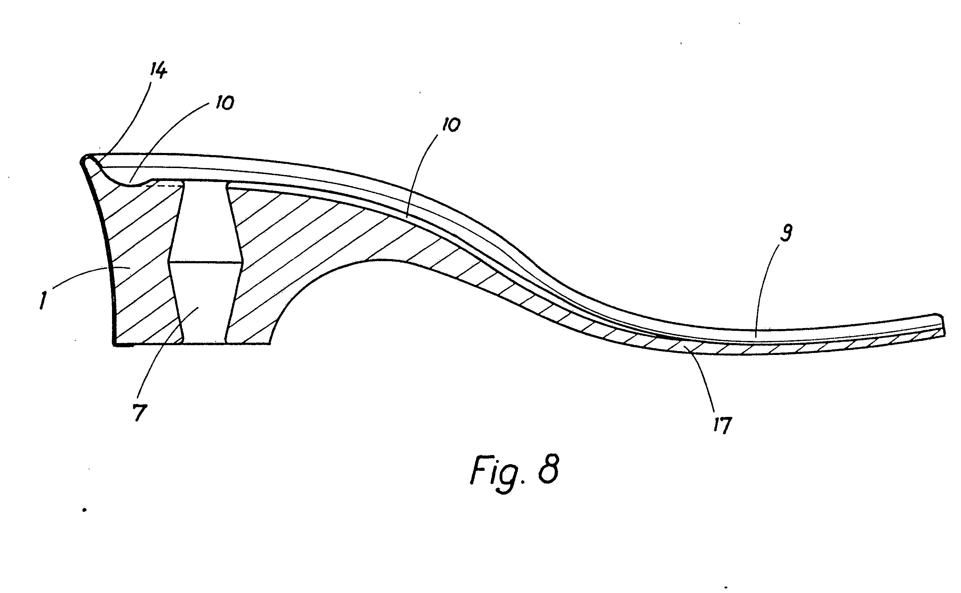

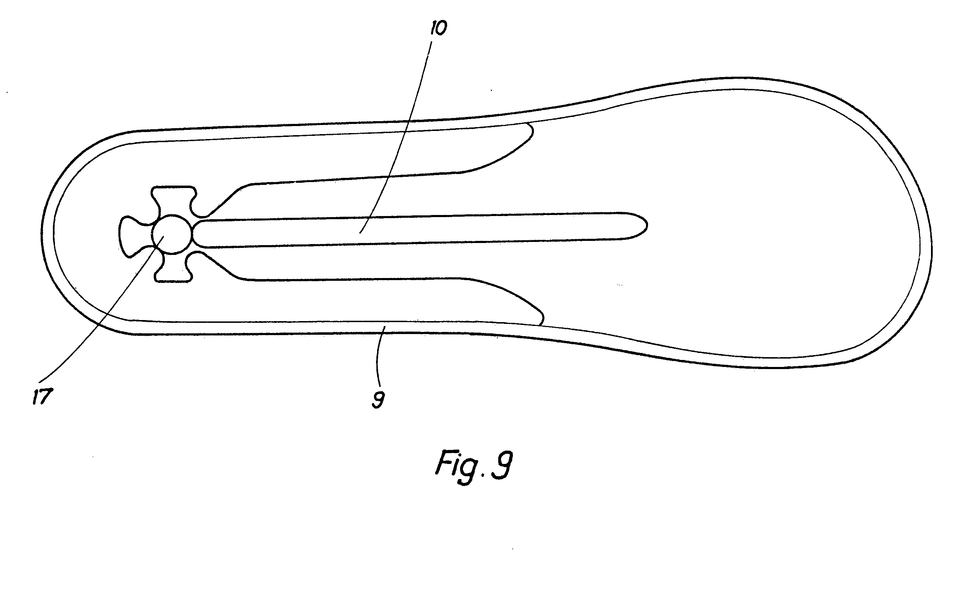

Der die Schale ebenfalls enthaltende Ansatz 17 des Absatzes 1 bzw. 16 kann aber auch vollständig über die Laufsohle hinweg nach vorn verlängert sein und hiermit eine Gesamtfußauflage bilden. Die Schale kann hierbei sogar noch die Fußspitze umfassen. Eine entsprechende Gestaltung des Keilabsatzes ist in Fig. 8 und 9 dargestellt. Auch hierbei ist naturgemäß der Ansatz 17 des Keilabsatzes 1 zwischen der Laufsohle 2 und der Fußauflage 6 fest eingeschlossen. Auch bei dieser Ausführungsform ist die Schale zweckmäßig mit einem Überzug versehen, der grundsätzlich so befestigt ist, wie dies in Fig. 5 dargestellt ist, indem seine obere Kante 14 allseitig um den oberen Schalenrand 9 herum umgebuggt ist und nach dem Spritzgießen durch die Kunststoffmasse der Fußauflage 6 festgehalten ist.

Insbesondere bei diesem Ausführungsbeispiel kann dem die Oberschale enthaltenden Ansatz 17 je nach Bedarf eine verschiedene Festigkeit erteilt werden, indem bezüglich dieses Ansatzes und damit im allgemeinen dem gesamten den Ansatz 17 enthaltenden Absatzstück eine bestimmte Wanddicke erteilt wird und die Materialauswahl entsprechend getroffen wird.

Während bei dem aus der DE-OS 2 444 472 bekannt gewordenen Schuh innerhalb der Form im oberen Bereich des Keilabsatzes noch eine Metalldichtlippe vorgesehen sein muß, um ein unerwünschtes Nachobenfließen des flüssigen Spritzmaterials zu verhindern, kommt eine solche Dichtung bei dem Schuh gemäß der Erfindung bereits durch den hochgezogenen Rand der das Absatzstück nach oben hin abschließenden Schale zustande, zumal wenn der Rand, wie dies die Ausführungsbeispiele zeigen, auch leicht nach außen abgebogen ist. Der von dem Leisten getragene Schaft 3 mit der Brandsohle 4 taucht in die Schale abdichtend ein, so daß zwischen dem Schaft 3 und dem hochgezogenen Rand 9 der Schale kein flüssiger Kunststoff herausfließen kann. Die Tiefe des Eintauchens von Leisten und Schaft wird hierbei von der Gestaltung und insbesondere der Dicke der Fußauflage 6 bestimmt.

**Patentansprüche**

1. Schuh, insbesondere Damenschuh, mit einer Laufsohle (2) und einer Fußauflage (6) aus Kunststoff oder Gummi (Spritzmaterial) und einem Laufsohle und Fußauflage verbindenden, an seiner Umfangsfläche von Spritzmaterial freien Absatz (1, 16) insbesondere Keilabsatz, dadurch gekennzeichnet, daß die Laufsohle (2) und die Fußauflage (6) sowie der Absatz (1, 16) durch ein sich von der Laufsohle (2) bis zur Fußauflage (6) erstreckendes Spritzmaterial, welches ein Durchgangsloch (7) oder mehrere solcher Durchgangslöcher des Absatzes (1, 16) ausfüllt, miteinander verbunden sind und daß die oberen Ränder (9) des Absatzes (1, 16) hochgezogen sind und eine Schale bilden.

2. Schuh nach Anspruch 1, dadurch gekennzeichnet, daß das Durchgangsloch (7) sich sowohl von der Fußauflage (6) als auch von der Laufsohle (2) her nach innen erweitert.

3. Schuh nach Anspruch 2, dadurch gekennzeichnet, daß das Durchgangsloch (7) an seinen beiden Eingängen abgerundete Kanten (8) aufweist.

4. Schuh nach Anspruch 1, dadurch gekennzeichnet, daß auf dem Boden der Schale Fließrinnen (10) für das Spritzmaterial vorgesehen sind.

5. Schuh nach Anspruch 1, dadurch gekennzeichnet, daß der Absatz (1, 16) über die Laufsohle (2) hinweg nach vorn verlängert ist und eine Gesamtfußauflage (6) darstellt, die wiederum als Schale ausgebildet ist.

6. Damenschuh nach Anspruch 1 mit einem Keilabsatz, dadurch gekennzeichnet, daß zu beiden Seiten der Schale an deren vorderem Ende spitzwinklige Ausschnitte (11) vorgesehen sind, durch welche die Enden (12) der oberen Ränder (9) freigelegt sind.

7. Schuh nach Anspruch 1, dadurch gekennzeichnet, daß die Umfangsfläche des Absatzes (1, 16) mit einem Überzug (13) versehen ist, dessen obere Kante um den oberen Rand (9) der die Fußauflage (6) enthaltenden Schale umgebuggt ist.

## Claims

1. A shoe, in particular a lady's shoe, having an outsole (2), a foot bed (6) made from a plastic material or rubber (moulded compound) and a heel (1, 16), in particular a wedge heel, connecting the outsole and the foot bed and having its circumferential surface free from moulding compound, characterized in that the outsole (2), the foot bed (6) and the heel (1, 16) are interconnected by moulding compound extending from the outsole (2) to the foot bed (6) and filling a through-hole (7) or several such through-holes in the heel (1, 16) and that the upper edges (9) of the heel (1, 16) are raised to form a shell.

2. A shoe in accordance with claim 1, characterized in that the clear opening of the through-hole (7) increases from both the foot bed (6) and the outsole (2) towards the interior.

3. A shoe in accordance with claim 2, characterized in that the edges (8) of both ends of the through-hole (7) are rounded.

4. A shoe in accordance with claim 1, characterized in that flow channels (10) for the moulding compound are provided on the bottom of the shell.

5. A shoe in accordance with claim 1, characterized in that the heel (1, 16) extends on top of the outsole (2) forwardly to form an overall foot bed (6) which again takes the form of a shell.

6. A lady's shoe in accordance with claim 1 having a wedge heel, characterized in that acute-angled portions (11) are cut away on both sides of the forward end of the shell so as to expose the ends (12) of the upper edges (9).

7. A shoe in accordance with claim 1, characterized in that the circumferential surface of the heel (1, 16) is provided with a coating (13) whose upper edge is folded over the edge (9) of the shell comprising the foot bed (6).

## Revendications

1. Chaussure, notamment chaussure pour dames, avec une semelle extérieure (2) et une double semelle (6) en matière synthétique ou en caoutchouc (matière injectée) et un talon (1, 16), notamment un talon américain qui assemble la semelle extérieure avec la double semelle et dont la surface extérieure est exempte de matière injectée, caractérisée ce que la semelle extérieure (2) et la double semelle (6) ainsi que le talon (1, 16) sont assemblés entre eux par de la matière injectée qui remplit une ouverture de passage (7) ou plusieurs de ces ouvertures de passage du talon (1, 16) et qui s'étend de la semelle extérieure (2) à la double semelle (6), les bords supérieurs (9) du talon (1, 16) étant en saillie vers le haut pour former une cuvette.

2. Chaussure selon la revendications 1, caractérisée en ce que l'ouverture de passage (7) s'élargit vers l'intérieur, aussi bien à partir de la double semelle (6) qu'à partir de la semelle extérieure (2).

3. Chaussure selon la revendication 2, caractérisée en ce que l'ouverture de passage (7) comporte des bords arrondis (8) à ses deux entrées.

4. Chaussure selon la revendication 1, caractérisée en ce que des rigoles d'écoulement (10) pour la matière injectée sont prévues au fond de la cuvette.

5. Chaussure selon la revendication 1, caractérisée en ce que le talon (1, 16) est prolongé loin vers l'avant sur la semelle extérieure (2) en formant une double semelle complète (6), qui est également réalisée comme une cuvette.

6. Chaussure pour dames selon la revendication (1) avec un talon américain, caractérisée en ce que des découpages (11) à angle aigu sont prévus sur les deux côtés de la cuvette, à leurs extrémités avant et grâce auxquels les extrémités (12) des bords supérieurs (9) sont libres.

7. Chaussure selon la revendication 1, caractérisée en ce que la surface extérieure du talon (1, 16) est prévue avec un revêtement (13) dont le bord supérieur est replié autour du bord supérieur (9) de la cuvette qui contient la double semelle (6).

Fig. 1

0 023 356

Fig. 2

3

4

2

*Fig. 2a*

Fig. 3

Fig. 4

Fig. 5

Fig. 6

Fig. 7

Fig. 8

0 023 356

Fig. 9

0 023 356